# EUROPEAN PATENT SPECIFICATION

(11) **EP 1 734 891 B1**
(45) Date of publication and mention of the grant of the patent: **29.08.2007**
(21) Application number: 05734928.4
(22) Date of filing: 14.04.2005
(51) Int. Cl.: A61C 19/04, A61C 5/02

(54) **ENDODONTIC DEVICE FOR DETECTING THE ROOT CANAL MORPHOLOGY**
ENDODONTISCHE VORRICHTUNG ZUM NACHWEIS DER WURZELKANAL-MORPHOLOGIE
DISPOSITIF ENDODONTIQUE POUR DETECTER LA MORPHOLOGIE D'UN CANAL RADICULAIRE

(30) Priority: 16.04.2004 IT FI20040091
(43) Date of publication of application: 27.12.2006
(73) Proprietor: Cammisa, Michele, 71017 Torremaggiore, FG (IT); Perra, Caterina, 50134 Firenze (IT)
(72) Inventor: Cammisa, Michele, 71017 Torremaggiore, FG (IT); Perra, Caterina, 50134 Firenze (IT)
(74) Representative: Bardini, Marco Luigi
(86) International application number: PCT/IT2005/000217
(87) International publication number: WO 2005/099616

(56) References cited:
- DE-A1- 3 211 669
- DE-U1- 20 312 435

## Description

The present invention concerns the field of endodontic techniques, i.e. those therapeutic treatments that make use of instruments for cleansing, shaping, disinfection and filling the root canal system in the root portion of the teeth.

Such techniques allow the functionality of a tooth to be restored when the vital portion (the so-called "pulp") has been irreversibly damaged by bacteria, chemical agents or traumatic events. For this purpose, instruments of various diameter or conicity, made of Nickel-Titanium alloy, are used, which are mounted on suitable handpieces and rotated continuously with different values of torque, i.e. the maximum turning moment that an instrument cannot exceed in operation.

Both the selection of the working sequence to be followed and that of the working parameters of the instrument (rotation speed, torque, revolutions per minute) are based on the difficulty of the operation, in turn a function of intrinsic anatomical characteristics, or else deriving from the working conditions: degree of curvature of the canal, characteristics of the access cavity, inclination of the instrument, work position, etc. Currently, the evaluation of difficulty, and the consequent operative choices, are basically left to the medical operator's sensitivity and experience, and therefore with varying outcomes from case to case. The operator, moreover, in many cases is not in a condition to have a complete and exact picture of the situation, and must proceed by assumptions that, with hindsight, do not always prove to be correct.

Document DE 20312435 U discloses a probe for measurement of the width of a root canal apex for dental surgery.

The object of the present invention is to overcome the circumstances just described, by providing an instrument capable of transmitting objective information to the medical operator on the characteristics of the canals to be treated, thus guiding the choices and the working methods with criteria that are no longer simply empirical.

According to the present invention, such an object is achieved with the endodontic device the essential characteristics of which are defined in the first of the appended claims.

Characteristics and advantages of the endodontic device for detecting the root canal morphology according to the present invention will be apparent from the following description of an embodiment thereof, given purely as an example and not for limiting purposes, with reference to the attached drawings in which:
- figure 1 is a schematic representation of the device according to the invention;
- figure 2 is an enlarged view of an endodontic instrument of the device of figure 1; and
- figure 3 is a cross section of the instrument taken along lines III-III of figure 2.

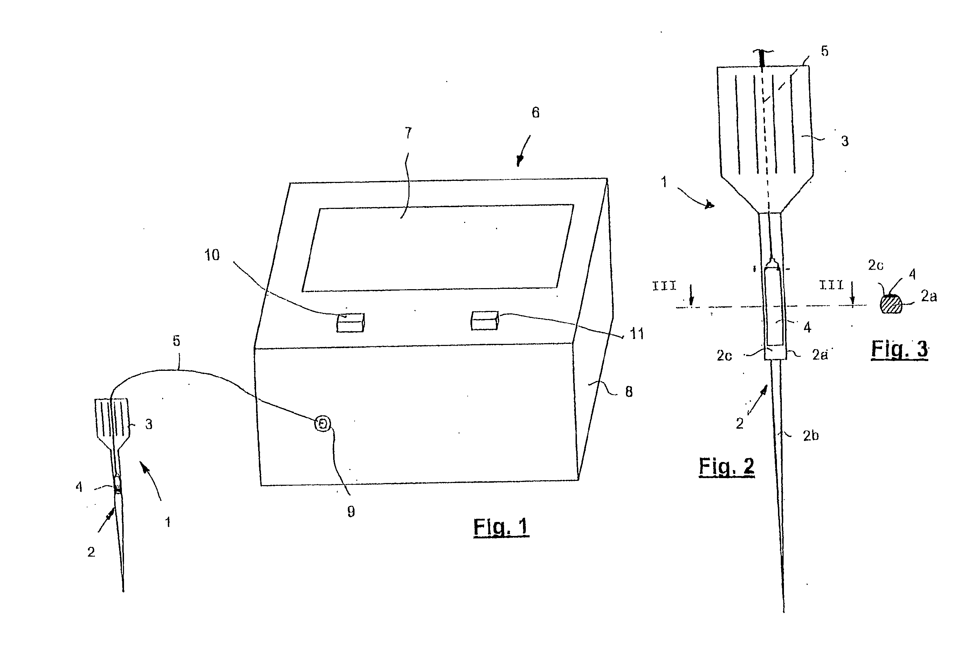

With reference to the above figures, an endodontic device according to the invention comprises a hand-driven endodontic instrument 1, in the example consisting of a root canal probe 2 with a handle 3 at one end that allows its manipulation by a medical operator. The probe 2, as shown in particular in figure 2, consists of a stem made of a shape memory Nickel-Titanium alloy, with a substantially cylindrical tail portion 2a adjacent to the handle 3 and a conical portion 2b culminating with a guide point. The probe 2 has dimensional characteristics suitable for allowing the apex of the root canal of the tooth to be reached, when the shaping treatment of the canal itself-through the cutting instruments established by the clinical protocol-has not yet begun.

On the substantially cylindrical tail portion 2a of the probe 2 a flat face 2c is formed, on which an extensometer 4 is applied, for example through gluing. In the depicted embodiment the extensometer 4 is a resistive element the electrical resistance of which varies in response to its deformation, and then to the deformation of the material with which it is integral. The provision of the extensometer 4, of a type known per se (for example, the precision sensor EA-06-031DE-120 provided by the US company "Measurements Group" of Raleigh, NC can be used), does not prevent the sterilisation of the probe (possibly sealed in a suitable envelope), provided that a glue is used having suitable temperature resistance, also in this case according to what can easily be obtained from products on the market.

A bipolar cable 5, terminating with a jack connector (not represented), projects from the extensometer 4 coaxially in the handle 3, and beyond it. The connector allows the connection of the cable 5 to processing means of the signal that can be gained from the extensometer 4, arranged in a central unit 6. The connection through the cable 5 can obviously be replaced by a wireless connection. The processing means, of a type comparable to those used for generic applications of the extensometers and similar, allow the variations in resistance of the extensometer 4 to be detected with the maximum precision, translating them into a measurement signal of the deformation, and consequently of the stress acting on the probe 2. The signal can be visualised or in any case interpreted by the medical operator.

For such a purpose, the central unit 6 can, like in the example schematically illustrated, comprise a display 7 for displaying the measurement of the stress, on the top side of a box-shaped body 8. The latter, as well as a female connector 9 for the connection of the cable 5, can also have buttons for controlling the device, for example and simply an on/off button 10 and a reset button 11. The body 8 also houses electrical power supply means, preferably comprising a battery system (not shown).

With the device according to the invention, the medical operator can therefore have a measurement, at the least indicative, of the stress acting on the root canal probe 2, a stress that can be due both to the direction of insertion of the probe itself in the root canal, and to the curvature of the latter. As far as the first aspect is concerned, this results in the possibility of identifying an optimal working direction, i.e. of minimum stress, for the rotating cutting instruments, guiding the operator in the elimination of the coronal interference and suggesting the most correct method of insertion of the instrument. Then, with reference to the second aspect, it is clear that, by rotating the probe 2 around its own axis inside the channel, a three-dimensional picture of the criticality of the canal itself can be worked out, which can be used to modify or estabilish operating sequences intended for individual clinical cases, as well as to suggest the setting of different working parameters of the cutting instrument (in particular, the torque values) according to the specific circumstances. The object of the invention, as mentioned in the introductory part, is thus fully achieved.

The processing means can also carry out a translation of the stress directly in an angular indication of the curvature of the root canal, with a preset algorithm, worked out experimentally. Alternatively, a correlation graph between measured stress and angulation value (or other geometric magnitude of the canal) can be serigraphed on the box-shaped body 8, so as to be always and immediately visible to the operator. The measurement of the stress (and/or of the angulation), instead of exact and continuous through the display, can be provided discretely, through a series of LEDs progressively lighting up as the detected value increases, accompanied or not by sound indications.

The invention can in general be reduced to practice with embodiments different from the one of the example. The probe 2 can take up the form of an actual cutting instrument for endodontic use, even not hand-driven and of whatever material. The resisitive extensometer 4 can be replaced with other extensometer means suitable to the purpose, such as a semi-conductor or piezoelectric extensometer or furthermore, more generally, an active capacitative, inductive or electronic element capable of detecting with the required precision the deformation of the materials as a function of the variations of its electrical/electronic characteristics.

The association of the extensometer with the endodontic instrument, as well as by gluing, can be carried out with alternative methods; in particular, the extensometer means can be formed directly on the surface of the tool with known technologies such as the application of circuitry (for example made from copper) by photoengraving, or by serigraphy with conductive inks.

The obtained measurement signal can also be supplied (with transmission of the signal through whatever known protocol such as serial, wireless or whatever else) to other machines by endodontics such as micromotors, apical localisers, fatigue measurers, assemblies and filling systems (i.e. handpiece devices carrying a heating point to be introduced into the root canal to soften the dental filling material). The machines can thus undergo automatic adjustments according to the measurements provided by the device.

The device can, moreover, be totally or partially integrated in the aforementioned apparatuses, so that the invention adds an advantageous functional characteristic to the products already present on the market. The rotation of the probe 2, or similar endodontic instrument, can also be carried out by a micromotor. In this case the handle 3, instead of being intended for direct manipulation, shall be shaped so as to be engageable in a dental prophy angle, i.e. a handpiece suitable for driving the endodontic instrument into low speed rotation.

Other variants and/or modifications can be brought to the endodontic device for detecting the root canal morphology according to the present invention, without for this reason departing from the scope of protection of the invention itself as defined in the appended claims.

## Claims

1. Endodontic device comprising an endodontic instrument (1) for insertion in a dental root canal, **characterised in that** it comprises extensometer means (4), associated with said instrument (1) for providing a signal that is a function of the deformation of said instrument, and processing means (6) for receiving and processing said signal to provide a medical operator with information on the stress acting on said instrument, and consequently on the morphological characteristics of said dental root canal.

2. The device according to claim 1, wherein said endodontic instrument(I) has dimensional characteristics suitable for allowing the apex of said root canal to be reached and the rotation about its own axis inside the canal itself, and comprises, besides a conical portion culminating with a guide point, a substantially cylindrical tail portion (2a), with a flat face (2c) on which said extensometer means (4) are applied.

3. The device according to claim 2, wherein a handle (3) extends from said cylindrical tail portion (2a) for allowing the manipulation of said instrument by said medical operator.

4. The device according to claim 2, wherein engagement means of said instrument in a dental prophy angle extend from said cylindrical tail portion (2a) for driving said tool in rotation at a low speed.

5. The device according to any of the previous claims, wherein said endodontic instrument (1) is made of a shape memory metal alloy.

6. The device according to claim 5, wherein said metal alloy is a shape memory Nickel-Titanium alloy.

7. The device according to any of the previous claims, wherein said extensometer means (4) comprise a resistive, semiconductor or piezoelectric extensometer.

8. The device according to any of the previous claims, wherein said extensometer means (4) are connected to said endodontic instrument (1) through a glue having temperature resistance such as to allow the sterilisation of said instrument.

9. The device according to any of claims 1 to 7, where in said extensometer means (4) are applied directly to said endodontic instrument (1) with photoengraving or serigraphy procedures.

10. The device according to any of the previous claims, wherein said processing means are arranged in a central unit (6), dialoguing with said extensometer means (4) and comprising, in addition to electrical power supply means, display means (7) for displaying said deformation signal and/or said stress information.

11. The device according to claim 10, wherein said unit (6) is wired to said extensometer means (4).

12. The device according to claim 10, wherein said unit and said extensometer means (4) dialogue through a wireless connection.

13. The device according to any of claims 9 to 12, wherein a correlation graph between the measurement of said stress and the value of a geometric magnitude of said canal is applied on said central unit (6).

14. The device according to any of the previous claims, wherein said processing means are suitable for translating said deformation signal so as to provide information on the morphological characteristics of said canal directly to said medical operator.

15. The device according to any of the previous claims, comprising transmission means of said signal, or of information deriving from it, to an endodontal machine such as a micromotor, an apical localiser, a fatigue measurer or a filling system.

16. The device according to any of the previous claims, associated or integrated with, an endodontal machine such as a micromotor, an apical localiser, a fatigue measure r or a filling system.

## Patentansprüche

1. Endodontische Vorrichtung, enthaltend ein endodontisches Instrument (1) zum Einsetzen in einen dentalen Wurzelkanal, **dadurch gekennzeichnet, dass** sie Extensometereinrichtungen (4) in Verbindung mit dem Instrument (1), um ein Signal bereit zu stellen, das eine Funktion der Deformation des Instruments ist, und Verarbeitungseinrichtungen (6) zum Empfangen und Verarbeiten des Signals enthält, um einen medizinischen Operateur mit Informationen über die Belastung, die auf das Instrument wirkt, und folglich über die morphologischen Charakteristika des dentalen Wurzelkanals zu versorgen.

2. Vorrichtung nach Anspruch 1, wobei das endodontische Instrument (1) Dimensionscharakteristika hat, die geeignet sind, das Erreichen der Spitze des Wurzelkanals und die Drehung um seine eigene Achse innerhalb des Kanal selbst zu gestatten, und neben einem konischen Teil, der mit einem Führungspunkt kulminiert, einen im wesentlichen zylindischen Schwanzteil (2a) mit einer flachen Seite (2c) enthält, an welcher die Extensometereinrichtungen (4) aufgebracht sind.

3. Vorrichtung nach Anspruch 2, wobei sich ein Griff (3) von dem zylindrischen Schwanzteil (2a) aus erstreckt, um die Manipulation des Instruments durch den medizinischen Operateur zu gestatten.

4. Vorrichtung nach Anspruch 2, wobei sich Eingriffseinrichtungen des Instruments in einen dentalen Prophylaxewinkel von dem zylindrischen Schwanzteil (2a) aus erstrecken, um das Werkzeug mit einer niedrigen Geschwindigkeit zum Drehen anzutreiben.

5. Vorrichtung nach einem der vorhergehenden Ansprüche, wobei das endodontische Instrument (1) aus einer Formgedächtnismetalllegierung hergestellt ist.

6. Vorrichtung nach Anspruch 5, wobei die Metalllegierung eine Formgedächtnis-Nickel-Titan-Legierung ist.

7. Vorrichtung nach einem der vorhergehenden Ansprüche, wobei die Extensometereinrichtungen (4) ein resistives Halbleiter- oder Piezoelektrik-Extensometer enthalten.

8. Vorrichtung nach einem der vorhergehenden Ansprüche, wobei die Extensometereinrichtungen (4) mit dem endodontischen Instrument (1) durch einen Kleber verbunden sind, der eine Temperaturbeständigkeit hat, um eine Sterilisation des Instrumentes zu gestatten,

9. Vorrichtung nach einem der Ansprüche 1 bis 7, wobei die Extensometereinrichtungen (4) durch ein Fotogravur- oder Seriegrafieverfahren direkt auf das endodontische Instrument (1) aufgebracht sind.

10. Vorrichtung nach einem der vorhergehenden Ansprüche, wobei die Verarbeitungseinrichtungen in einer Zentraleinheit (6) angeordnet sind, mit den Extensometereinrichtungen (4) im Dialog sind und zusätzlich zu elektrischen Leistungszufuhreinrichtungen Anzeigeeinrichtungen (7) enthalten, um das Deformationssignal und/oder die Belastungsinformationen anzuzeigen.

11. Vorrichtung nach Anspruch 10, wobei die Einheit (6) mit den Extensometereinrichtungen (4) verkabelt ist.

12. Vorrichtung nach Anspruch 10, wobei die Einheit und die Extensometereinrichtungen (4) über eine kabellose Verbindung im Dialog sind.

13. Vorrichtung nach einem der Ansprüche 9 bis 12, wobei ein Korrelationsgraph zwischen der Messung der Belastung und dem Wert einer geometrischen Größe des Kanals auf die Zentraleinheit (6) angewandt wird.

14. Vorrichtung nach einem der vorhergehenden Ansprüche, wobei die Verarbeitungseinrichtungen geeignet sind, um das Deformationssignal umzuwandeln, um den medizinischen Operateur direkt mit Informationen über die morphologischen Charakteristika des Kanals zu versorgen.

15. Vorrichtung nach einem der vorhergehenden Ansprüche, enthaltend Übertragungseinrichtungen des Signals oder von davon erhaltenen Informationen zu einer Endotontalmaschine, wie einem Mikromotor, einem Spitzenlokalisator, einem Erschöpfungsmesser oder einem Füllsystem.

16. Vorrichtung nach einem der vorhergehenden Ansprüche, verbunden oder integriert mit einer Endotontalmaschine, wie einem Mikromotor, einem Spitzenlokalisator, einem Erschöpfungsmesser oder einem Füllsystem.

## Revendications

1. Dispositif endodontique comprenant un instrument endodontique (1) pour l'insertion dans un canal radiculaire dentaire, **caractérisé en ce qu'**il comprend des moyens d'extensomètre (4), montés en association avec ledit instrument (1) pour fournir un signal qui est une fonction de la déformation du dit instrument, et des moyens de traitement (6) pour recevoir et traiter ledit signal et fournir à un opérateur médical l'information sur la contrainte agissant sur ledit instrument, et en conséquence sur les caractéristiques morphologiques du dit canal radiculaire dentaire.

2. Le dispositif selon la revendication 1, dans lequel ledit instrument endodontique (1) présente des caractéristiques dimensionnelles appropriées pour lui permettre d'atteindre l'apex du dit canal radiculaire et permettre sa rotation autour de son propre axe à l'intérieur du canal lui-même, et comporte, outre une portion conique se terminant avec un point de guidage, une portion d'extrémité (2a) sensiblement cylindrique, avec une face plane (2c) sur laquelle sont appliqués lesdits moyens d'extensomètre (4).

3. Le dispositif selon la revendication 2, dans lequel une poignée (3) s'étend à partir de ladite portion d'extrémité cylindrique (2a) pour permettre la manipulation du dit instrument par ledit opérateur médical.

4. Le dispositif selon la revendication 2, dans lequel des moyens d'engagement du dit instrument dans un dispositif de traitement prophylactique s'étendent à partir de ladite portion d'extrémité cylindrique (2a) pour entraîner ledit outil dans une rotation à vitesse réduite.

5. Le dispositif selon l'une quelconque des revendications précédentes, dans lequel ledit instrument endodontique (1) est réalisé en un alliage métallique à mémoire de forme.

6. Le dispositif selon la revendication 5, dans lequel ledit alliage métallique est un alliage de Titane-Nickel à mémoire de forme.

7. Le dispositif selon l'une quelconque des revendications précédentes, dans lequel lesdits moyens d'extensomètre (4) comprennent un extensomètre résistif, semi-conducteur ou piézoélectrique.

8. Le dispositif selon l'une quelconque des revendications précédentes, dans lequel lesdits moyens d'extensomètre (4) sont reliés au dit instrument endodontique (1) via une colle résistant à la chaleur pour permettre la stérilisation du dit instrument.

9. Le dispositif selon l'une quelconque des revendications 1 à 7, dans lequel lesdits moyens d'extensomètre (4) sont appliqués directement sur ledit instrument endodontique (1) par la technique de la photogravure ou de la sérigraphie.

10. Le dispositif selon l'une quelconque des revendications précédentes, dans lequel lesdits moyens de traitement sont situés dans une unité centrale (6), communiquant avec lesdits moyens d'extensomètre (4) et comprenant, en plus de moyens d'alimentation en énergie électrique, des moyens d'affichage (7) pour afficher ledit signal de déformation et/ou ladite information de contrainte.

11. Le dispositif selon la revendication 10, dans lequel ladite unité (6) est reliée par fil aux dits moyens d'extensomètre (4).

12. Le dispositif selon la revendication 10, dans lequel ladite unité et lesdits moyens d'extensomètre (4) communiquent par liaison sans fil.

13. Le dispositif selon l'une quelconque des revendications 9 à 12, dans lequel un graphique de corrélation entre la mesure de ladite contrainte et la valeur d'une grandeur géométrique du dit canal est introduit dans ladite unité centrale (6).

14. Le dispositif selon l'une quelconque des revendications précédentes, dans lequel lesdits moyens de traitement sont aptes à traduire ledit signal de déformation afin de fournir directement au dit opérateur médical des informations sur les caractéristiques morphologiques du dit canal.

15. Le dispositif selon l'une quelconque des revendications précédentes, comprenant des moyens de transmission du dit signal, ou de l'information déduite de celui-ci, à une machine endodontale telle qu'un micromoteur, un localisateur apical, un capteur de fatigue ou un système de plombage.

16. Le dispositif selon l'une quelconque des revendications précédentes, associé à ou intégré dans, une machine endodontale telle qu'un micromoteur, un localisateur apical, un capteur de fatigue ou un système de plombage.
